# EUROPEAN PATENT SPECIFICATION

(11) **EP 3 785 996 B1**
(45) Date of publication and mention of the grant of the patent: **29.05.2024**
(21) Application number: 20169967.5
(22) Date of filing: 16.04.2020
(51) Int. Cl.: B60R 1/00

(54) **INTEGRATED ALARM SYSTEM FOR VEHICLES**
INTEGRIERTES ALARMSYSTEM FÜR FAHRZEUGE
SYSTÈME D'ALARME INTÉGRÉ POUR LES VÉHICULES

(30) Priority: 19.04.2019 TW 108204822 U
(43) Date of publication of application: 03.03.2021
(73) Proprietor: Autoequips Tech Co., Ltd., 235 New Taipei City (TW)
(72) Inventor: Wang, Ting-Peng, 235 New Taipei City (TW); Lai, I-Jen, 235 New Taipei City (TW)
(74) Representative: Lang, Christian

(56) References cited:
- EP-A1- 1 916 846
- DE-A1-102018 117 548
- KR-A- 20160 034 669
- US-A1- 2017 203 692
- US-A1- 2019 116 315

## Description

### BACKGROUND OF THE INVENTION

### Technical Field

The present invention relates to a warning system for assisting driving safety, in particular, to an architecture of a co-system integrating radar sensing and image identification to precisely display the direction and distance of an obstacle as an early warning on a real image directly, thereby achieving an image integrated warning system with full blind spot scanning.

### Description of Related Art

According to a known Around View Monitor (AVM) system, it utilizes a plurality of small cameras installed on a vehicle in order to monitor the images at all angles surrounding the entire car in real time. Through the image processing of twist correction, view point conversion etc., a plurality of aerial view images processed are eventually combined (stitched) along with the vehicle image into an overall (including vehicle and surrounding environment) aerial image. Consequently, blind spots likely to be encountered during reversing or turning of the driving can be reduced.

However, the current AVW systems available in the market are mostly restricted by the software and hardware or image processing performance such that the image stitching areas tend to have overlapped or disappeared images, such drawback still cannot be improved properly, leading to system error occasionally. If such system is applied to a small vehicle, when image error occurs, the driver is still able to see external pedestrians and cars directly from the outside such that the safety hazard may be less. However, if such system is applied to a large vehicle, due to the vehicle's long length and large turning radius, the driver has numerous blind spots that are hidden from direct visual observation, and when image error occurs, it can cause traffic accident due to any slight carelessness of the driver.

Document US 2019/0116315 A1 relates to an bird's-eye view video generation device, an bird's-eye view video generation system, an bird's-eye view video generation method, and a non-transitory storage medium. Disclosed therein is an image integrated warning system for a vehicle according to the preamble of claim 1.

### BRIEF SUMMARY OF THE INVENTION

In view of the deficiency of the aforementioned currently existing products, the present invention provides an image integrated warning system for a vehicle, and its primary objective is to utilize radar sensing to compensate the deficiency of the AVM identification technology and to integrate the early warning results of the two, thereby achieving the effective of early warning without blind spots, and preventing accidents due to error in the image stitching areas.

Secondly, the present invention is able to indicate early warning for the direction and distance of an obstacle relative to the vehicle from the real images directly in order to allow the driver to understand the condition of the vehicle and the obstacle directly, thereby preventing accidents. Moreover, with the generation of warning sound and oral voice, it is able to assist the driver to make quick responsive actions upon receiving early warning.

To achieve the aforementioned objectives and effects, the present invention provides an image integrated warning system for a vehicle, which image integrated warning system has the features of claim 1. Further embodiments of the image integrated warning system are subject-matter of the dependent claims. The image integrated warning system according to the invention comprises a plurality of camera units, a plurality of sensing units, a processing unit and a display unit. The processing unit comprises an image stitching module, an image identification module and an image integration module. In addition, the technique adopted comprises: the camera units are used to take real images from a surrounding of the vehicle in different directions; the image stitching module is electrically connected to the camera units and used to stitch and integrate the real images into an aerial vehicle surrounding real image; the image identification module is electrically connected to the image stitching module and is used to track and compare the vehicle surrounding real image in order to identify an obstacle adjacent to the vehicle and to output an identification message; the sensing units are used to transmit sensing waves toward the real image stitching directions and to output sensing messages based on return waves; the image integration module is electrically connected to the image stitching module, the image identification module and the sensing units, and includes a virtual alert range to be integrated into the vehicle surrounding real image; wherein the virtual alert range surrounds the vehicle and comprises a plurality of virtual sections, and each one of the virtual sections is configured to change into a warning section based on the identification message or each one of the sensing messages; the display unit is electrically is electrically connected to the image integration module and is used to display an integrated vehicle surrounding real image.

According to the aforementioned system structure, the virtual alert range is changed into the virtual sections based on a direction and a distance of the vehicle.

According to the aforementioned system structure, the virtual sections refer to colorless sections, and each one of the warning sections is changed into a red section, a yellow section or a green section respectively.

According to the aforementioned system structure, the warning sections have increasing distances from the vehicle displayed in the aerial vehicle surrounding real image and are changed into the red section for the smallest distance from the vehicle, the green section for the greatest distance from the vehicle or the yellow section for a medium distance between said red and green sections.

According to the aforementioned system structure, the image integration module can be further electrically connected to a plurality of sensing units for transmitting sensing waves toward a lateral side or a rear side of the vehicle and outputting sensing messages based on return waves.

According to the aforementioned system structure, the image integration module can be further electrically connected to a warning unit for sending out a warning sound or to play an oral voice when any one of the virtual sections is changed into the warning section.

According to the aforementioned system structure, the sensing unit can be a millimeter-wave radar or an ultrasonic radar.

The following provides a detailed description on the aforementioned objectives, technical effects and features of the present invention along with the accompanying drawings.

### BRIEF DESCRIPTION OF THE SEVERAL VIEWS OF THE DRAWINGS

FIG. 1 is a system architecture diagram according to an embodiment of the present invention; and
FIG. 2 is a schematic view of a real image screen according to a preferred embodiment of the present invention.

### DETAILED DESCRIPTION OF THE INVENTION

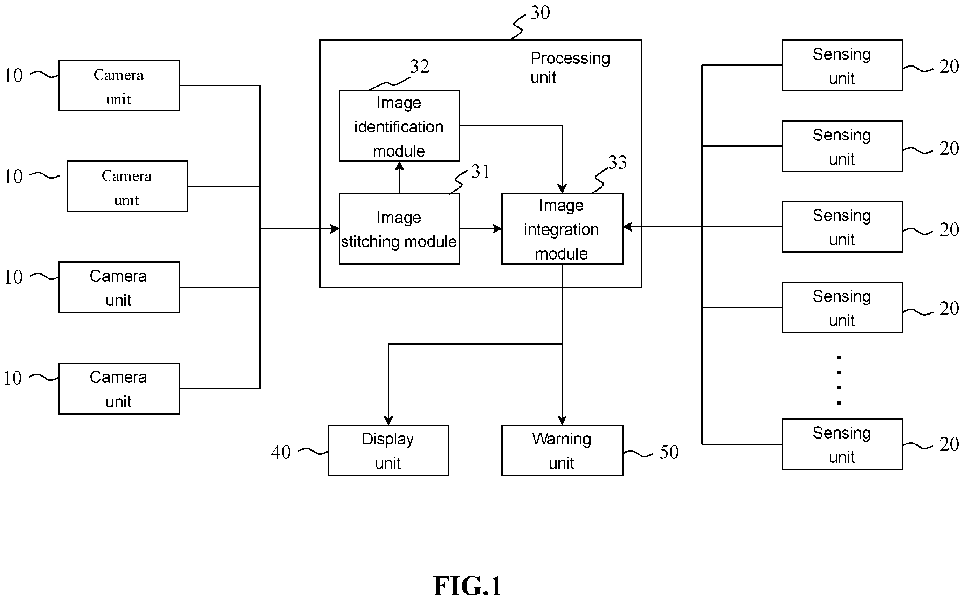

As shown in FIG. 1, an image integrated warning system of the present invention, mainly applied to a vehicle, the hardware architecture comprises a plurality of camera units 10, a plurality of sensing units 20, a processing unit 30, a display unit 40 and a warning unit 50.

In addition, the camera units 10 are mainly used as a basis for the Around View Monitor (AVM) and are installed on the vehicle at different directions in order to take real images respectively from a surrounding of the vehicle divided into equal arts at different directions. In this embodiment, the quantity of the camera units 10 refers to four camera units 10 as a common quantity in practice, and such camera units are used to take real images at the four directions of front, rear, left and right sides of the vehicle.

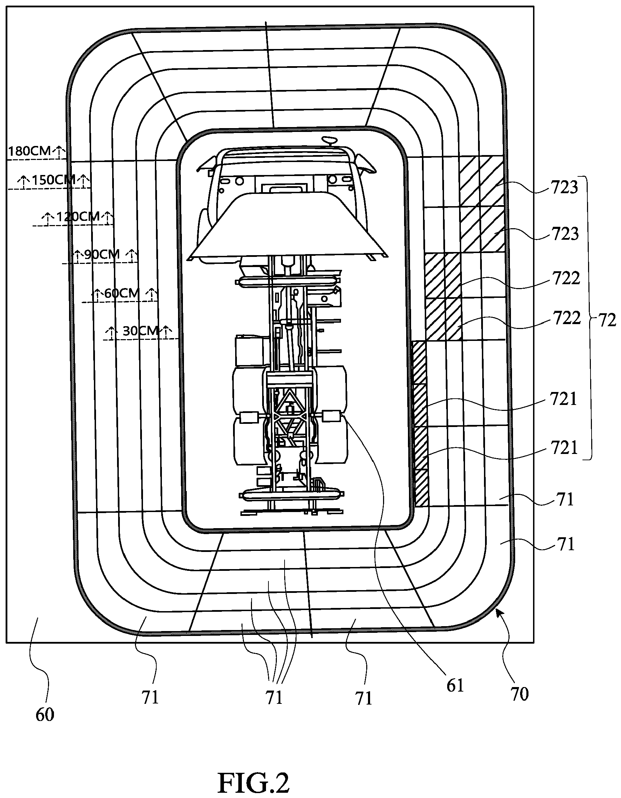

The processing unit 30 is used as a processing host machine installed on the vehicle and is electrically connected to the camera units 10. In this embodiment, the processing unit 30 is an Electronic Control Unit (ECU) specialized for vehicle, and it includes a plurality of function modules. In this embodiment, it can include at least an image stitching module 31, and image identification module 32 and an image integration module 33. The image stitching module 31 is able to receive the real image taken by the camera units 10 and to perform image correction and stitching processes as well as to load an image of the vehicle 61 for integration in order to create an aerial vehicle surrounding real image 60 (as shown in Figure 2). The image identification module 32 is electrically connected to the image stitching module 31, and it is mainly to perform the processing of image comparison. When an obstacle is identified to approach the vehicle 61 according to the continuous tracking and comparison on the vehicle surrounding real image 60, it is able to analyze the direction and distance of the obstacle and to generate an identification message.

The sensing units 20 refer to small sensors installed on the vehicle, and they can be millimeter-wave radars or ultrasonic radars. In this embodiment, the sensing units 20 shall have a quantity at least equivalent to the quantity of the camera units 10. In addition, the sensing unit 20 of an equivalent quantity are mainly installed on the vehicle and between two camera units 10 in order to transmit sensing waves toward the real image stitching directions and to output sensing messages based on the return waves, thereby compensating the deficiency of the image stitching location. Furthermore, additional sensing units 20 can be installed according to the needs in order to perform more precise detection for important visual blind spots, such as installation at the lateral side or rear side of the vehicle. Consequently, through the transmission of sensing waves and receiving the return waves, obstacles at the visual blind spots at the lateral sides or rear side of the vehicle can be detected.

Please refer to FIG 1 and FIG. 2. The image integration module 33 is mainly to perform processing on the image and includes a predefined virtual alert range 70, and it is electrically connected to the image stitching module 31, the image identification module 32 and the sensing unit 20. This module is able to integrate relevant information in order to compose the virtual alert range 70 into the vehicle surrounding real image 60, and to output the image to the display unit 40 electrically connected to the image integration module 33

In this embodiment, the virtual alert range 70 surrounds an external of the vehicle 61, and the azimuthal line extended from the vehicle 61 along with the equal-distance line of the vehicle are able to divide such range into a plurality of virtual sections 71. The image integration module 33 is able to allow each one or a plurality of virtual sections 71 corresponding to the direction and distance of the obstacle into a warning section 72 when an obstacle enters into the virtual alert range 70 according to the identification message and sensing messages, thereby displaying such sections on the display screen of the display unit 40. The display of the warning sections 72 corresponding to the obstacle is able to allow the driver to directly use the integrated vehicle surrounding real image 60 to readily understand the location of the obstacle (i.e. warning section 72) relative to the vehicle 61.

In a feasible embodiment, when there is no obstacle entering into the virtual alert range 70 (i.e. no obstacle of approaching vehicle), then each of the virtual sections 71 is, normally, a colorless section in order to prevent impacts on the driver's observation of the real image. However, when an obstacle enters into the virtual alert range 70, then each warning section 72 is able to select a red, yellow or green section according to the needs. The warning sections 72 can be different color sections according to the distance between the vehicle 61 and the obstacle. For example, a section 721 close to the vehicle 61 can be depicted in red color to indicate high hazard level (great attention shall be made), and a section 722 with a medium distance from the vehicle 61 can be depicted in yellow color to indicate medium hazard level, and a section 723 far away from the vehicle 61 can be depicted in green color to indicate low hazard level.

In addition, in this embodiment, the image integration module 33 is further electrically connected to the warning unit 50, and it generally uses a buzzer or a reporting device. When an obstacle enters the virtual alert range 70 (i.e. image integration module 33 determines the location of the obstacle according to the identification message and the sensing messages, and allows the virtual section 71 corresponding to the obstacle to change to a warning section 72, the warning unit 50 is able to generate a warning sound or oral voice in order to warn the driver for attention. In a preferred embodiment, the warning sound and voice can have more diverse application methods, such as the warning sound can cooperate with different hazardous warning sections 72 (such as the aforementioned green section 723, yellow section 722, red section 721). When the warning section 72 indicates a change, it can also cooperatively generate different sounds of a short sound, long sound, slow sound, quick sound, continuous sound etc. in order to allow the driver to be aware of the current hazard level directly. In addition, the oral voice can be played according to the direction and distance of the obstacle. As exemplary shown in FIG. 2, when a change of red section 721 is indicated, the oral voice can played "obstacle is found at 4 o'clock direction and at a distance of 30~60cm". Furthermore, when a change of yellow section 722 is indicated, the oral voice of "obstacle is found a 3 o'clock direction and at a distance of 60~120cm" can be played in order to allow the driver to more easily obtained the warning without affecting the driving quality.

In view of the above, this embodiment of the present invention is able to integrate the image identification and the radar sensing messages such that it is able to compensate the deficiency of known AVM image and is also able to precisely integrate the direction and distance of an obstacle approaching the vehicle into the real image in order to perform visualization warning, thereby allowing the driver to understand the vehicle and obstacle condition from the image directly. Consequently, the present invention is able to achieve the technical effects of precise blind spot scanning, facilitated observation and convenient use.

Nevertheless, it shall be understood that the content of the above description is provided to illustrate the preferred embodiments of the present invention only such that it shall not be used to restrict the claim scope of the present invention. The extent of the protection conferred by the invention is determined by the claims. Nevertheless, the description and drawings shall be used to interpret the claims.

### THE LIST OF REFERENCE SIGNS

- 10: Camera unit
- 20: Sensing unit
- 30: Processing unit
- 31: Image stitching module
- 32: Image id entification module
- 33: Image integration module
- 40: Display unit
- 50: Warning unit
- 60: vehicle surrounding real image
- 61: vehicle
- 70: virtual alert range
- 71: virtual section
- 72: warning sections
- 721: section (red)
- 722: section (yellow)
- 723: section (green)

## Claims

1. An image integrated warning system for a vehicle (61), comprising:
at least four camera units (10) for taking real images respectively from a surrounding of the vehicle (61) divided into equal parts at different directions;
an image stitching module (31) electrically connected to the camera units (10) and used to stitch and integrate the real images into an aerial vehicle surrounding real image (60);
an image identification module (32) electrically connected to the image stitching module (31) and used to track and compare the vehicle surrounding real image (60) and to identify an obstacle adjacent to the vehicle (61) and to output an identification message;
at least four sensing units (20) for transmitting sensing waves toward stitching directions of the real images respectively and outputting sensing messages according to return waves;
an image integration module (33) electrically connected to the image stitching module (31), the image identification module (32) and the sensing units (20), and having a predefined virtual alert range (70) to be integrated into the vehicle surrounding real image (60); and
a display unit (40) electrically connected to the image integration module (33) and used to display an integrated vehicle surrounding real image (60);
**characterized in that**
the virtual alert range (70) surrounds the vehicle (61) and includes a plurality of virtual sections (71), and each one of the virtual sections (71) configured to change into a warning section (72) based on the identification message or each one of the sensing messages;
wherein the virtual alert range (70) is divided into the virtual sections (71) based on a direction and a distance of the vehicle (61);
wherein the virtual sections (71) refer to colorless sections, and each one of the warning sections (72) is changed into a red section (721), a yellow section (722) or a green section (723) respectively;
wherein the warning sections (72) have increasing distances from the vehicle displayed in the aerial vehicle surrounding real image and are changed into the red section (721) for the smallest distance from the vehicle (61), the green section (723) for the greatest distance from the vehicle (61) or the yellow section (722) for a medium distance between said red and green sections (721, 723).

2. The image integrated warning system for a vehicle (61) according to claim 1, wherein the image integration module (33) is further electrically connected to a plurality of sensing units (20) for transmitting sensing waves toward a lateral side or a rear side of the vehicle (61) and outputting sensing messages based on return waves.

3. The image integrated warning system for a vehicle (61) according to claim 2, wherein the image integration module (33) is further electrically connected to a warning unit (50) for sending out a warning sound or playing an oral voice according to a direction and a distance of the warning section (72) when any one of the virtual sections (71) is changed into the warning section (72).

4. The image integrated warning system for a vehicle (61) according to claim 3, wherein the sensing unit (20) can be a millimeter-wave radar or an ultrasonic radar.

## Patentansprüche

1. Bildintegriertes Warnsystem für ein Fahrzeug (61), umfassend:
mindestens vier Kameraeinheiten (10) zum Aufnehmen von realen Bildern aus der Umgebung des Fahrzeugs (61), die in gleiche Teile in verschiedenen Richtungen unterteilt sind;
ein Bildzusammensetzungsmodul (31), das elektrisch mit den Kameraeinheiten (10) verbunden ist und zum Zusammensetzen und Integrieren der realen Bilder in ein reales Luftbild der Fahrzeugumgebung (60) verwendet wird;
ein Bildidentifikationsmodul (32), das elektrisch mit dem Bildzusammensetzungsmodul (31) verbunden ist und dazu verwendet wird, das das Fahrzeug umgebende reale Bild (60) zu verfolgen und zu vergleichen und ein Hindernis in der Nähe des Fahrzeugs (61) zu identifizieren und eine Identifikationsnachricht auszugeben;
mindestens vier Abtasteinheiten (20) zum Senden von Abtastwellen in die jeweiligen Zusammenfügungsrichtungen der realen Bilder und zum Ausgeben von Abtastmeldungen entsprechend den zurückkehrenden Wellen;
ein Bildintegrationsmodul (33), das elektrisch mit dem Bildzusammensetzungsmodul (31), dem Bildidentifikationsmodul (32) und den Erfassungseinheiten (20) verbunden ist und einen vordefinierten virtuellen Warnbereich (70) aufweist, der in das reale Bild (60) der Fahrzeugumgebung zu integrieren ist; und
eine Anzeigeeinheit (40), die elektrisch mit dem Bildintegrationsmodul (33) verbunden ist und verwendet wird, um ein integriertes reales Fahrzeugumgebungsbild (60) anzuzeigen,
**dadurch gekennzeichnet, dass**
der virtuelle Warnbereich (70) das Fahrzeug (61) umgibt und mehrere virtuelle Abschnitte (71) umfasst, und jeder der virtuellen Abschnitte (71) so konfiguriert ist, dass er sich auf der Grundlage der Identifikationsnachricht oder jeder der Erfassungsnachrichten in einen Warnabschnitt (72) ändert,
wobei der virtuelle Warnbereich (70) in die virtuellen Abschnitte (71) basierend auf einer Richtung und einem Abstand des Fahrzeugs (61) unterteilt ist,
wobei sich die virtuellen Abschnitte (71) auf farblose Abschnitte beziehen und jeder der Warnabschnitte (72) jeweils in einen roten Abschnitt (721), einen gelben Abschnitt (722) oder einen grünen Abschnitt (723) geändert wird,
wobei die Warnabschnitte (72) zunehmende Abstände von dem in dem realen Luftfahrzeug-Umgebungsbild angezeigten Fahrzeug haben und in den roten Abschnitt (721) für den kleinsten Abstand von dem Fahrzeug (61), den grünen Abschnitt (723) für den größten Abstand von dem Fahrzeug (61) oder den gelben Abschnitt (722) für einen mittleren Abstand zwischen den roten und grünen Abschnitten (721, 723) geändert werden.

2. Bildintegriertes Warnsystem für ein Fahrzeug (61) nach Anspruch 1, wobei das Bildintegrationsmodul (33) ferner elektrisch mit einer Vielzahl von Erfassungseinheiten (20) verbunden ist, um Erfassungswellen in Richtung einer Seite oder einer Rückseite des Fahrzeugs (61) zu senden und Erfassungsmeldungen auf der Grundlage der zurückkommenden Wellen auszugeben.

3. Bildintegriertes Warnsystem für ein Fahrzeug (61) nach Anspruch 2, wobei das Bildintegrationsmodul (33) ferner elektrisch mit einer Warneinheit (50) verbunden ist, um einen Warnton auszusenden oder eine mündliche Stimme entsprechend einer Richtung und einem Abstand des Warnabschnitts (72) abzuspielen, wenn einer der virtuellen Abschnitte (71) in den Warnabschnitt (72) geändert wird.

4. Bildintegriertes Warnsystem für ein Fahrzeug (61) nach Anspruch 3, wobei die Erfassungseinheit (20) ein Millimeterwellen-Radar oder ein Ultraschall-Radar sein kann.

## Revendications

1. Système d'avertissement intégré à l'image pour un véhicule (61), comprenant :
au moins quatre unités de caméra (10) pour prendre des images réelles respectivement à partir d'un environnement du véhicule (61) divisé en parties égales dans différentes directions ;
un module d'assemblage d'images (31) connecté électriquement aux unités de caméra (10) et utilisé pour assembler et intégrer les images réelles dans une image réelle de l'environnement du véhicule aérien (60) ;
un module d'identification d'images (32) connecté électriquement au module d'assemblage d'images (31) et utilisé pour suivre et comparer le véhicule entourant l'image réelle (60) et pour identifier un obstacle adjacent au véhicule (61) et pour émettre un message d'identification ;
au moins quatre unités de détection (20) pour transmettre des ondes de détection vers les directions d'assemblage des images réelles respectivement et émettre des messages de détection en fonction des ondes de retour ;
un module d'intégration d'images (33) connecté électriquement au module d'assemblage d'images (31), au module d'identification d'images (32) et aux unités de détection (20), et ayant une plage d'alerte virtuelle prédéfinie (70) à intégrer dans l'image réelle environnante du véhicule (60) ; et
une unité d'affichage (40) connectée électriquement au module d'intégration d'images (33) et utilisée pour afficher une image réelle intégrée de l'environnement du véhicule (60) ;
**caractérisé par le fait que**
la zone d'alerte virtuelle (70) entoure le véhicule (61) et comprend plusieurs sections virtuelles (71), chacune des sections virtuelles (71) étant configurée pour se transformer en section d'avertissement (72) en fonction du message d'identification ou de chacun des messages de détection ;
la zone d'alerte virtuelle (70) est divisée en sections virtuelles (71) en fonction de la direction et de la distance du véhicule (61) ;
les sections virtuelles (71) sont des sections incolores, et chacune des sections d'avertissement (72) est transformée en section rouge (721), jaune (722) ou verte (723) respectivement ;
les sections d'avertissement (72) ont des distances croissantes par rapport au véhicule affiché dans l'image réelle environnante du véhicule aérien et sont transformées en section rouge (721) pour la plus petite distance par rapport au véhicule (61), en section verte (723) pour la plus grande distance par rapport au véhicule (61) ou en section jaune (722) pour une distance moyenne entre lesdites sections rouge et verte (721, 723).

2. Système d'avertissement à intégration d'images pour un véhicule (61) selon la revendication 1, dans lequel le module d'intégration d'images (33) est en outre connecté électriquement à une pluralité d'unités de détection (20) pour transmettre des ondes de détection vers un côté latéral ou un côté arrière du véhicule (61) et émettre des messages de détection sur la base des ondes de retour.

3. Le système d'avertissement intégré à l'image pour un véhicule (61) selon la revendication 2, dans lequel le module d'intégration d'image (33) est également connecté électriquement à une unité d'avertissement (50) pour envoyer un son d'avertissement ou jouer une voix orale en fonction d'une direction et d'une distance de la section d'avertissement (72) lorsque l'une des sections virtuelles (71) est transformée en section d'avertissement (72).

4. Le système d'avertissement intégré à l'image pour un véhicule (61) selon la revendication 3, dans lequel l'unité de détection (20) peut être un radar à ondes millimétriques ou un radar à ultrasons.
